# EUROPÄISCHE PATENTSCHRIFT

(11) **EP 2 468 542 B1**
(45) Veröffentlichungstag und Bekanntmachung des Hinweises auf die Patenterteilung: **27.02.2019**
(21) Anmeldenummer: 11192600.2
(22) Anmeldetag: 08.12.2011
(51) Int. Cl.: B60C 27/10, F16G 15/04, B66C 1/12

(54) **Sperrplatte zum Spannen von Reifenketten**
Check plate for tensioning tyre chains
Plaque d'arrêt pour le serrage de chaînes de pneus

(30) Priorität: 23.12.2010 DE 102010064146
(43) Veröffentlichungstag der Anmeldung: 27.06.2012
(73) Patentinhaber: RUD Ketten Rieger & Dietz GmbH u. Co. KG, 73432 Aalen (DE)
(72) Erfinder:
(74) Vertreter: Grünecker Patent- und Rechtsanwälte PartG mbB

(56) Entgegenhaltungen:
- WO-A1-2004/087553
- AT-B- 287 417
- DE-A1- 3 227 995
- DE-C1- 10 105 410
- DE-U1- 8 632 620
- DE-U1- 9 314 307
- GB-A- 2 127 129

## Beschreibung

Die Erfindung betrifft eine Sperrplatte zum Spannen von Reifenketten mit Hilfe einer Spannkette mit einem Sperrschlitz sowie eine Anordnung zum Spannen einer Reifenkette mit Hilfe einer Spannkette, wobei die Anordnung eine Sperrplatte und eine Durchzugslasche aufweist.

Reifenketten, darunter fallen beispielsweise Gleitschutz- und Reifenschutzketten, werden über die Lauffläche eines Fahrzeugreifens gelegt, so dass sie im Bereich der Reifenaufstandfläche zwischen Reifen und Untergrund zu liegen kommen. Gleitschutzketten erhöhen die Traktion auf rutschigen Untergründen wie Eis, Schnee oder Matsch. Reifenschutzketten bilden einen Kettenpanzer um den Reifen, um dessen Beschädigung zu vermeiden. Darüber hinaus gibt es auch Mischformen, wie beispielsweise Reifenschutzketten, die gleichzeitig die Traktion erhöhen.

Insbesondere bei sehr großen Reifen, wie sie beispielsweise bei Lastkraftwägen oder bei Spezialfahrzeugen auf Baustellen oder im Bergbau eingesetzt werden, werden die Reifenketten oft durch eine Spannkette gespannt. Die Spannkette liegt im Bereich der von der Karosserie weg, nach außen weisenden Reifenflanke und verläuft konzentrisch um die Achse des den Reifen tragenden Rades. Das der Lauffläche des Reifens zugeordnete Laufnetz der Reifenkette ist an mehreren in Umfangsrichtung der Spannkette voneinander beabstandeten Stellen über Durchzugslaschen mit der Spannkette verbunden. Durch Spannen der Spannkette wird der von ihr gebildete Kreis verkleinert und damit die Reifenkette straff über die Lauffläche gezogen. Die DE 23 11 291 C2 und die DE 193 80 15 U zeigen Reifenketten, die durch eine Spannkette gespannt werden.

Bei Reifenketten für große Reifen sind sehr große Spannkräfte nötig, um die Reifenkette straff über die Lauffläche zu ziehen. Zudem wird die Reifenkette oftmals vor Ort unter widrigen Bedingungen gespannt. Das Spannen einer Reifenkette ist somit nicht selten mit erheblichem Aufwand verbunden.

Wird die Reifenkette nicht sorgfältig gespannt, kann dies zu Beschädigungen der Reifenkette oder Reifen führen und erhebliche Stillstandszeiten nach sich ziehen. Auf Baustellen oder im Bergbau können derartige Stillstandzeiten zu erheblichen Ausfallkosten führen, die den Wert des zu ersetzenden Materials übersteigen.

In der DE 32 27 995 A1 ist eine gattungsbildende Sperrplatte für Reifenketten mit einem Sperrschlitz gezeigt. Die GB 2 127 129 A und die WO 2004/087553 A1 zeigen jeweils ein Kettenverkürzungselement mit zwei Sperrschlitzen. In der DE 86 32 620.1 ist ein Sicherungs- und Durchziehteil für eine Kette mit einem Sperrschlitz gezeigt.

Der Erfindung liegt daher die Aufgabe zugrunde, Mittel zu schaffen, mit denen eine Reifenkette einfach und sicher bei geringer Fehleranfälligkeit gespannt werden kann.

Gelöst wird diese Aufgabe durch eine Sperrplatte zum Spannen von Reifenketten mit Hilfe einer Spannkette, mit einem Sperrschlitz, dessen lichte Breite größer als eine Dicke und kleiner als eine äußere Breite der Kettenglieder der Spannkette ist, und mit einer Durchzugsöffnung, die eine Innenkontur aufweist, in die eine Außenkontur der Spannkette einschreibbar ist, und wobei die Spannkette quer zu ihrer Längserstreckung unverlierbar zwischen einer im Bereich des Sperrschlitzes angeordneten Sperrposition und einer im Bereich der Durchzugsöffnung angeordneten Durchzugsposition beweglich ist, und wobei zwischen der Sperrposition und der Durchzugsposition wenigstens eine mit der Spannkette zusammenwirkende Rückhalteeinrichtung vorgesehen ist, welche wenigstens einen Rastvorsprung aufweist, wobei sich bei einer erfindungsgemäßen Sperrplatte der Rastvorsprung in Längsrichtung der Spannkette von der Sperrplatte weg erstreckt.

Ferner wird die Aufgabe erfindungsgemäß durch eine Anordnung zum Spannen einer Reifenkette mit Hilfe einer Spannkette gelöst, wobei die Anordnung eine erfindungsgemäße Sperrplatte aufweist.

Die Anordnung der Sperrposition im Bereich des Sperrschlitzes umfasst die wenigstens teilweise Anordnung im Sperrschlitz und die Anordnung der Durchzugsposition im Bereich der Durchzugsöffnung die wenigstens teilweise Anordnung in der Durchzugsöffnung.

Diese konstruktiv einfache Lösung ermöglicht ein sicheres und wenig fehleranfälliges Spannen der zur Sperrplatte passenden Spannkette. Durch die Durchzugsöffnung kann die Spannkette beim Spannen gezogen werden, bis die gewünschte Spannkraft erreicht ist. Anschließend wird die Spannkette einfach in die Sperrposition überführt, in der sie dann durch die Ränder des Sperrschlitzes gehalten ist. Da die Spannkette quer zu ihrer Längsrichtung unverlierbar in der Sperrplatte gehalten ist, kann die Sperrplatte dabei nicht seitlich von der Spannkette fallen.

Die geometrisch einfache Ausgestaltung der Sperrplatte vermeidet Fehlbedienungen.

Die erfindungsgemäße Lösung kann durch weitere, jeweils für sich vorteilhaft und voneinander unabhängige Ausgestaltungen wie folgt weiter verbessert werden.

Vorteilhaft ist, wenn die Sperrplatte und die Durchzugslasche in einer Betriebsposition, in der die Sperrposition mit der einen und die Durchzugsposition mit der anderen Durchzugsöffnung der Durchzugslasche fluchten, anordenbar ausgestaltet sind. In Kombination mit einer solchen Durchzugslasche ergibt sich bei der erfindungsgemäßen Anordnung der Vorteil, dass die Spannkette aufgrund der fluchtenden Position der beiden Durchzugsöffnungen der Durchzugslasche mit der Durchzugsposition und der Sperrposition der Sperrplatte selbsttätig die Sperrposition einnimmt, wenn die Spannkette wie üblich in einer Schlaufe zunächst durch die eine Durchzugsöffnung der Durchzugslasche und dann durch den Sperrschlitz der Sperrplatte geführt und anschließend durch die Durchzugsöffnung der Sperrplatte und die andere Durchzugsöffnung der Durchzugslasche wieder zurückgeführt wird.

So kann gemäß einer besonders vorteilhaften Ausgestaltung zwischen der Sperrposition und der Durchzugsposition wenigstens eine mit der Spannkette zusammenwirkende Rückhalteeinrichtung vorgesehen sein. Die Rückhalteeinrichtung verhindert, dass sich die Spannkette beispielsweise unter Einwirkung der Schwerkraft selbsttätig aus der Sperrposition bewegen kann. Dadurch wird das Spannen der Reifenkette auch in schwierigen Situationen sicherer. Insbesondere kann die Rückhalteeinrichtung einen Rastvorsprung aufweisen, durch den die Spannkette in der Spannposition einrastet.

Der Rastvorsprung kann bevorzugt in einem Bereich angeordnet sein, der von der Spannkette bei der Bewegung von der Durchzugs- in die Sperrposition überstrichen ist.

Der Rastvorsprung kann sich in einer weiteren vorteilhaften nicht beanspruchten Ausgestaltung in Richtung quer zur Längserstreckung der Spannkette in den Sperrschlitz hinein erstrecken, so dass er mit dem sich jeweils im Sperrschlitz befindlichen Kettenglied verrastet. Diese Ausgestaltung hat den Vorteil, dass die Rastsicherheit erhöht ist, wenn bei der Bewegung von der Durchzugs- in die Spannposition beide Schenkel des sich im Sperrschlitz befindlichen Kettengliedes an dem wenigstens einen Rastvorsprung vorbei bewegt werden müssen und der wenigstens eine Rastvorsprung mit jedem der beiden Schenkel dieses Kettengliedes verrastet. Hat die Spannkette somit die Sperrposition noch nicht vollständig erreicht, wird dennoch die Spannkette bereits gehalten, wenn nur der erste Schenkel zu dem wenigstens einen Rastvorsprung bewegt ist. Allerdings kann diese vorzeitige Verrastung auch zu Bedienungsfehlern führen, wenn nämlich das Personal irrtümlich annimmt, nach der Verrastung des ersten Schenkels des sich im Spannschlitz befindlichen Kettengliedes bereits die Sperrposition erreicht zu haben. Außerdem ist die Montage des Rastvorsprunges bei dieser Ausgestaltung etwas komplizierter, da der Rastvorsprung nicht nur in Richtung zum Sperrschlitz, sondern auch in Längsrichtung der Kette in der Sperrplatte gegen ein Abfallen gesichert werden muss.

Ragt der wenigstens eine Rastvorsprung in den Sperrschlitz hinein, so ist gemäß einer weiteren vorteilhaften Ausgestaltung der Anordnung die Breite des Schlitzes an dieser Stelle geringer als die Dicke der Kettenglieder der Spannkette. Die Spannkette kann nun unter Auslenkung des Rastvorsprunges vorbeigeschoben werden.

Es dürfte daher etwas vorteilhafter sein, wenn gemäß der erfindungsgemäßen Lösung sich der wenigstens eine Rastvorsprung in Längsrichtung der Spannkette von der Sperrplatte wegerstreckt. Bei dieser Ausgestaltung ragt der wenigstens eine Rastvorsprung aus wenigstens einer Flachseite der Sperrplatte hervor und wirkt mit dem oder den zu dem sich im Sperrschlitz befindlichen Kettenglied benachbarten Kettenglied oder Kettengliedern zusammen. Diese Ausgestaltung ermöglicht eine einfache Montage der Rastvorsprünge. Außerdem unterstützt bei dieser Ausgestaltung die in der Spannkette wirkende Spannkraft die Rastwirkung des Rastvorsprunges, weil sie die Spannkette gegen den Rastvorsprung zieht.

Der wenigstens eine Rastvorsprung kann zumindest abschnittsweise elastisch auslenkbar ausgestaltet sein und beispielsweise ein Federelement umfassen. Durch Vorbeischieben der Spannkette aus der Durchzugs- in die Sperrposition oder zurück kann bei dieser Ausgestaltung der Rastvorsprung elastisch beiseite gedrückt werden. Die Elastizität ist dabei vorteilhaft so bemessen, dass manuell aufbringbare Kräfte des Bedienpersonals für eine Auslenkung des wenigstens einen Rastvorsprunges ausreichen.

Insbesondere kann der wenigstens eine Rastvorsprung einen elastisch verformbaren, beispielsweise kompressiblen Rastnoppen umfassen. Der Rastnoppen kann aus einem Gummi-, Kautschuk- und/oder Kunststoffmaterial ausgestaltet sein. Der Rastnoppen kann hantelförmig ausgestaltet sein und zu beiden Flachseiten der Sperrplatte vorragen. Der Rastnoppen kann die Sperrplatte durchsetzen. Die Rückhalteeinrichtung kann in einer besonders einfachen Ausgestaltung lediglich aus elastisch verformbaren Körpern bestehen, die an der Sperrplatte befestigt sind und mit einem Abschnitt den Rastnoppen bilden.

Ragt der Rastvorsprung aus der Flachseite der Sperrplatte in Längsrichtung der Spannkette hervor, so kann gemäß einer weiteren vorteilhaften Ausgestaltung die Dicke der Sperrplatte einschließlich des wenigstens einen Rastvorsprunges an der Stelle des wenigstens einen Rastvorsprunges größer sein als der größte Abstand zweier durch ein Kettenglied voneinander getrennter Kettenglieder der Spannkette bzw. deren zueinander weisenden Bugs an dieser Stelle. Bei dieser Ausgestaltung kann die Spannkette nur dann von der Durchzugs- in die Sperrposition verschoben werden, wenn sich der Rastvorsprung aus der Überlappung mit dem Bug des an die Sperrplatte angrenzenden Kettenglieds befestigt wird. Die Verformung erfolgt dabei durch den abgerundeten, zur Sperrplatte hinweisenden Bug des Kettengliedes oder der Kettenglieder, die unmittelbar mit den im Sperrschlitz eingeführten Kettenglied benachbart sind.

Von Vorteil ist ferner, wenn der Abstand zwischen der Durchzugsposition und der Sperrposition so bemessen ist, dass die Länge der Schlaufe der Spannkette zwischen der Sperrposition und der Durchzugsposition genau einem Kettenglied (oder einer ganzzahligen Anzahl von Kettengliedern) entspricht. Dies wird gemäß einer vorteilhaften Ausgestaltung erreicht, wenn der Abstand der Mitte der Sperrposition von der Mitte der Durchzugsposition betragsmäßig zwischen der Summe einerseits der inneren lichten Länge und der inneren lichten Breite und andererseits der Summe der äußeren Länge und der äußeren Breite der Kettenglieder der Spannkette liegt. Eine straffe Spannung der Schlaufe mit mehreren Kettengliedern Länge kann durch einen Abstand erreicht werden, der einem ganzzahligen Vielfachem dieses Bereichs entspricht.

Gemäß einer besonders vorteilhaften Ausgestaltung der Anordnung zum Spannen der Reifenkette mit Hilfe der Spannkette kann die Lage der Sperrplatte relativ zur Durchzugslasche bei wenigstens nahezu aneinanderliegender Sperrplatte und Durchzugslasche in einer Ebene quer zur Längsrichtung der Spannkette durch zusammenwirkende Positionierelemente an der Durchzugslasche und der Sperrplatte festgelegt sein. Wird bei dieser Ausgestaltung die Sperrplatte durch die in der Spannkette wirkende Spannkraft gegen die Durchzugslasche gedrückt, kann sich die Sperrplatte aufgrund der Positionierelemente nicht mehr relativ zur Durchzugslasche verschieben und insbesondere selbsttätig ihre sichere Betriebsstellung einnehmen. Die Positionierelemente können auch eine Fehlstecksicherung bilden, die ein lagerichtiges Aneinanderliegen von Sperrplatte und Durchzugslasche nur in einer Betriebsstellung erlaubt.

Bevorzugt kann der wenigstens eine Rastvorsprung der Sperrplatte gleichzeitig als Positionierelement dienen.

Die erfindungsgemäße Anordnung benötigt aufgrund der fluchtenden Anordnung der Öffnungen der Sperrplatte und der Öffnungen der Durchzugslasche keine zusätzlichen Befestigungselemente, mit denen die Sperrplatte in Längsrichtung der Spannkette an der Durchzugslasche befestigt ist. Die Sperrplatte ist aufgrund ihrer geometrischen Abstimmung mit der Spannkette und der Durchzugslasche aufgrund der Durchschleifung der Spannkette in der Betriebsstellung gehalten. Somit sind gemäß einer weiteren vorteilhaften Ausgestaltung in der Betriebsposition die Sperrplatte und die Durchzugslasche im Wesentlichen ausschließlich durch eine in der Spannkette herrschende Spannkraft gegeneinander gedrückt.

Im Folgenden ist die Erfindung anhand von lediglich beispielhaft angegebenen Ausführungsformen mit Bezug auf die Zeichnungen näher erläutert. Die unterschiedlichen Merkmale der verschiedenen Ausführungsformen können dabei beliebig miteinander kombiniert werden. Einzelne Merkmale können auch weggelassen werden, wenn es auf deren oben beschriebenen Vorteile bei bestimmten Anwendungen nicht ankommen sollte.

In den Zeichnungen sind für funktionell gleiche oder baugleiche Elemente in den verschiedenen Ausführungsformen dieselben Bezugszeichen verwendet.

Es zeigen:
- Fig. 1: eine erste Ausführungsform einer erfindungsgemäßen Sperrplatte in einer schematischen Perspektivdarstellung;
- Fig. 2: die Sperrplatte der Fig. 1 in einer schematischen Darstellung in einer Betrachtungsrichtung II der Fig. 1;
- Fig. 3: eine zweite Ausführungsform einer nicht beanspruchten Sperrplatte in einer schematischen Perspektivdarstellung;
- Fig. 4: eine dritte Ausführungsform einer nicht beanspruchten Sperrplatte in einer schematischen Perspektivdarstellung;
- Fig. 5: eine Ausführungsform einer erfindungsgemäßen Anordnung umfassend eine Sperrplatte und eine Durchziehlasche in einer schematischen Perspektivdarstellung während des Spannvorgangs;
- Fig. 6: die Anordnung der Fig. 5 in einer schematischen Perspektivdarstellung einer Betriebsposition;
- Fig. 7: eine schematische Darstellung eines Kettengliedes der Spannkette zur Erläuterung von Abmessungen.

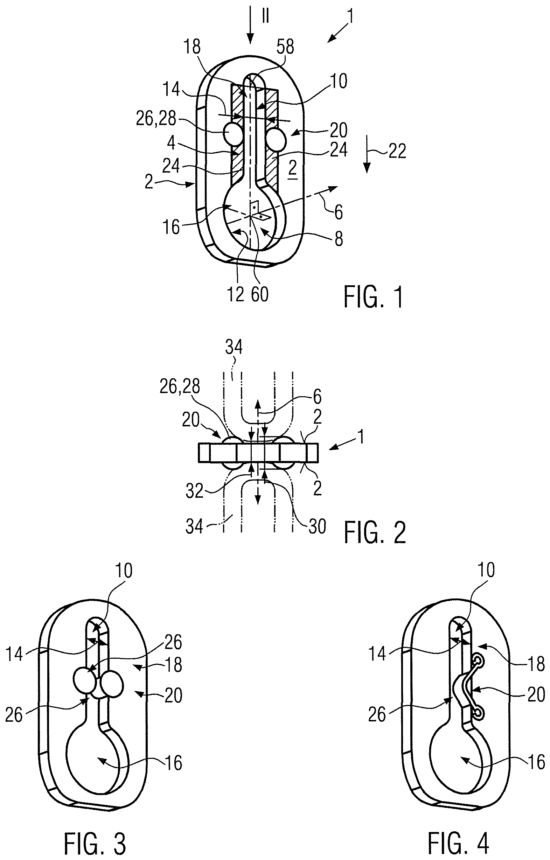

Zunächst wird der Aufbau einer erfindungsgemäßen Sperrplatte anhand der Ausführungsform der Fig. 1 beschrieben.

Fig. 1 zeigt eine Sperrplatte 1 in einer schematischen Perspektivdarstellung auf eine der beiden Flachseiten 2.

Die Sperrplatte 1 ist vorzugsweise aus einem Metallwerkstoff, beispielsweise Stahl, oder aus einem besonders bruchfesten Kunststoff, der bevorzugt faserverstärkt ist, gefertigt. Die Sperrplatte 1 ist bevorzugt spiegelsymmetrisch aufgebaut, so dass die beiden Fachseiten identisch sind, um Fehlbedienungen aufgrund von Seitenverwechslungen zu verhindern.

Die Sperrplatte 1 ist mit einer sich zu den Flachseiten 2 öffnenden, die Sperrplatte 1 durchsetzenden Öffnung 4 versehen, in der eine Spannkette (nicht gezeigt), wie sie insbesondere zum Spannen von Reifenketten verwendet wird, unverlierbar eingeführt werden kann. Die Abmessungen der Sperrplatte 1 und ihrer Elemente sind auf die Abmessungen der Spannkette abgestimmt. Die in Fig. 1 lediglich schematisch angedeutete Längsrichtung 6 der Kette verläuft dabei senkrecht zu den Flachseiten 2 und der von der Öffnung 4 aufgespannten Ebene. In Richtung quer zur Längsrichtung ist die Kette von der Sperrplatte 1 unverlierbar gehalten.

Bei der Ausführungsform der Fig. 1 ist die Unverlierbarkeit dadurch sichergestellt, dass die Öffnung 4 rundum begrenzt ist. Sollte in Richtung quer zu Längsrichtung 6 die Öffnung 4 einen nach außen hin offenen Schlitz aufweisen, so darf dieser nicht breiter sein, als die durch die Öffnung 4 reichende Spannkette, damit die Spannkette nicht in dieser Richtung aus der Öffnung 4 rutschen kann.

Die Öffnung 4 umfasst insbesondere eine Durchzugsöffnung 8 und einen Sperrschlitz 10.

Die Durchzugsöffnung 8 weist eine Durchlasskontur 12 auf, in die eine Außenkontur der der Sperrplatte 1 zugeordneten Spannkette einschreibbar ist. Somit kann die Spannkette durch die Durchzugsöffnung 8 in Längsrichtung 6 hindurchgezogen werden, ohne zu blockieren.

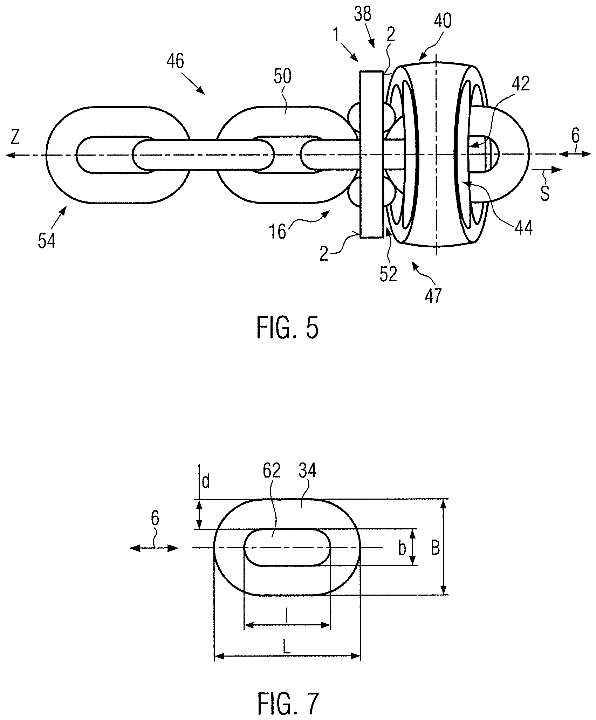

Der Sperrschlitz 10 weist eine lichte Breite 14 auf, die kleiner ist als eine äußere Breite der Kettenglieder der Spannkette. Bezüglich der Abmessungen der Kettenglieder der Spannkette wird auf die Erläuterungen zu Fig. 7 am Ende der Beschreibung verwiesen. Somit kann ein Kettenglied in den Sperrschlitz 10 in Richtung seiner Schmalseite bzw. weg von der Durchzugsöffnung eingeschoben werden. Im Sperrschlitz kann die Spannkette nicht mehr in Längsrichtung 6 durch die Sperrplatte 1 gezogen werden, da die benachbarten Kettenglieder des in den Sperrschlitz 10 eingeführten Kettenglieder die Bewegung in Längsrichtung 6 durch den Sperrschlitz blockieren.

Die in der Durchzugsöffnung 8 aufgenommene Spannkette kann zwischen einer im Bereich der Durchzugsöffnung 8 angeordneten Durchzugsposition 16 und einer im Bereich des Sperrschlitzes 10 angeordneten Sperrposition 18 bewegt werden. Hierzu sind der Sperrschlitz und die Durchzugsöffnung 8 miteinander verbunden. Beispielsweise kann, wie Fig. 1 zeigt, der Sperrschlitz 10 direkt in die Durchzugsöffnung 8 münden. Zwischen der Sperrposition und der Durchzugsposition ist eine Rückhalteeinrichtung 20 angeordnet, die die freie Beweglichkeit der Spannkette von der Sperrposition in die Durchzugsposition und gegebenenfalls auch zurück einschränkt. Die Bewegung von der Sperrposition in die Durchzugsposition ist erst nach Überwindung einer in Bewegungsrichtung wirkenden, vorbestimmten Rückhaltekraft möglich. Die Rückhaltekraft ist vorzugsweise so groß, dass die Spannkette durch die Rückhalteeinrichtung in der Sperrposition 18 entgegen der Schwerkraftrichtung 22 gehalten und die Rückhalteeinrichtung 20 durch eine manuell aufbringbare Kraft überwindbar ist.

Die Rückhalteeinrichtung 20 ist in einem Bereich 24 angeordnet, der bei der Bewegung der Spannkette zwischen der Sperrposition 18 und der Durchzugsposition 16 von der Spannkette überstrichen wird.

Die Rückhalteeinrichtung 20 kann, wie in Fig. 1 dargestellt ist, wenigstens einen Rastvorsprung 26 aufweisen, wobei vorzugsweise an jeder Seite des Sperrschlitzes 10 ein Rastvorsprung 26 vorgesehen ist. Der Rastvorsprung 26 ist zumindest abschnittsweise elastisch auslenkbar ausgestaltet und kann ein Federelement aufweisen. Nach Fig. 1 umfasst der wenigstens eine Rastvorsprung 26 bevorzugt einen elastisch verformbaren Rastnoppen 28 aus einem elastomeren Material, wie Kunststoff, Gummi und/oder Kautschuk. Der wenigstens eine Rastvorsprung 26 ist in Richtung der lichten Breite 14 seitlich neben dem oder am Schlitz angeordnet.

Fig. 2 zeigt eine Ansicht der Sperrplatte 1 der Fig. 1 in Richtung des Pfeils II. Der Rastvorsprung 26 der Rückhalteinrichtung 20 springt auf wenigstens einer Flachseite 2, bevorzugt an beiden Flachseiten 2, in Längsrichtung 6 vor. An der Stelle der Rückhalteeinrichtung 20 bzw. des Rastvorsprunges 26 ist die Dicke 30 der Sperrplatte 1 einschließlich der Rückhalteeinrichtung 20 größer als der größte Abstand 32 der zwei durch das Kettenglied im Sperrschlitz 10 voneinander getrennten Kettenglieder 34 gleicher Ausrichtung an der Stelle der Rückhalteeinrichtung 20 In Fig. 2 sind die Kettenglieder 34 bzw. deren zueinander weisenden Buge durch Phantomlinien angedeutet. Mit dieser Dimensionierung lässt sich die Spannkette nicht an der Rückhalteeinrichtung 20 vorbeischieben, ohne an die Rastvorsprünge 26 anzustoßen bzw. diese auszulenken. Um die Rastvorsprünge auszulenken, muss eine Rückhaltekraft überwunden werden. Die Spannkette lässt sich zumindest vorläufig zu Montagezwecken in der Sperrposition 18 fixieren.

Die Rastvorsprünge können Teil eines an seinen beiden Enden verdickten elastischen Körpers sein, der in die Sperrplatte eingesetzt und in dieser formschlüssig gehalten ist.

Die Figuren 3 und 4 zeigen weitere mögliche nicht beanspruchte Ausführungsformen der Rückhalteeinrichtung 20 für eine Anordnung. Der Einfachheit halber ist nur auf die Unterschiede zur Ausführungsform der Fig. 1 und 2 eingegangen.

Bei beiden nicht beanspruchten Ausführungsformen ragt die Rückhalteeinrichtung 20 mit ihrem wenigstens einen Rastvorsprung 26 in den Sperrschlitz 10 und verengt diesen. An der Stelle der Rückhalteeinrichtung 20 verringert sich die lichte Breite 14 des Sperrschlitzes 10 unter die Dicke d eines Kettengliedes 34 (vgl. Fig. 7) der Sperrkette. Somit kann auch bei den Ausführungsformen der Fig. 3 und 4 die Spannkette nicht ohne Überwindung einer vorbestimmten Rückhaltekraft zwischen der Durchzugsposition 16 und der Sperrposition 18 bewegt werden.

Figur 3 zeigt eine Ausführungsform, bei der die Rastvorsprünge 26 aus einem elastisch komprimierbaren Material gebildet sind. Wie bei der Ausführungsform der Fig. 1 und 2 umfasst die Rückhalteeinrichtung zwei beidseits des Schlitzes angeordnete einteilige Rastkörper. Unter Umständen reicht (wie bei Fig. 1 auch) ein einziger Rastvorsprung 26 aus, um die erforderliche Rückhaltekraft aufzubringen.

Bei der nicht beanspruchten Ausgestaltung gemäß Figur 4 ist die Rückhalteeinrichtung 20 an lediglich einer Seite des Schlitzes und in Form einer in die Sperrplatte eingepressten Blattfeder, beispielsweise aus Metall, gefertigt. Selbstverständlich können auch beidseits des Schlitzes derartige Federn angeordnet sein. Eine Blattfeder, wie sie Fig. 4 zeigt, oder eine Spiralfeder mit einem noppenförmigen Aufsatz kann auch anstelle der Rastnoppen 28 in Fig. 1 eingesetzt werden.

Figur 5 zeigt eine Anordnung 38 zum Spannen einer Reifenkette mit einer Sperrplatte 1 in einer der oben beschriebenen Ausführungsformen - hier der Ausführungsform der Fig. 1 - und einer Durchzugslasche 40. Die Durchzugslasche 40 hat zwei im wesentlichen parallel zueinander ausgerichtete Durchzugsöffnungen 42, 44, deren lichte Innenkonturen jeweils größer sind als die Außenkontur der Spannkette 46, so dass die Spannkette, ohne zu blockieren, durch die Durchzugsöffnungen 42, 44 gezogen werden kann. In der in Fig. 5 gezeigten Position verläuft die Spannkette 46 durch die eine Durchzugsöffnung 42 der Durchzugslasche 40 und die in Längsrichtung 6 der Spannkette 46 fluchtend dahinter angeordnete Durchzugsöffnung 8 der Sperrplatte 1. Das Ende der Sperrplatte 1 mit dem Sperrschlitz 10 ragt über die Durchzugslasche 40, so dass die der Sperrplatte 1 zugewandte Seite der Durchzugsöffnung 44 nicht von der Sperrplatte 1 abgedeckt ist. Zum Spannen wird die Spannkette mit einer Zugkraft Z beaufschlagt und die Kette durch die Durchzugsöffnung 42 der Durchzugslasche 40 hindurchgezogen. Die Sperrplatte 1 kann mit der Spannkette 46 bewegt und am Ende des Spannvorganges entlang der Spannkette 46 an die Durchzugslasche 40 bewegt werden, oder die Spannkette 46 wird gleichzeitig durch die Durchzugsöffnung 42 der Durchzugslasche 40 und die Durchzugsöffnung 8 der Sperrplatte 1 von Hand an der Durchzugslasche 40 gehaltener Sperrplatte 2 bewegt.

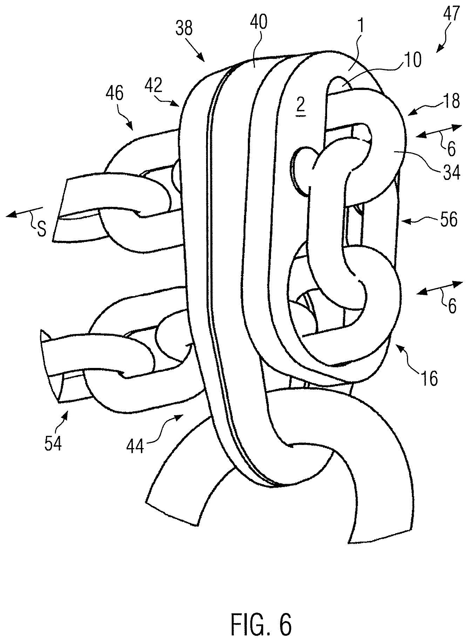

Anschließend wird die Spannkette 46 von der in Fig. 5 dargestellten Durchzugsposition 16 in die Sperrposition 18 überführt, in dem die Sperrplatte 1 quer zur Längsrichtung 6 so relativ zur Durchzugslasche 40 bewegt wird, dass ein Kettenglied in den Sperrschlitz 10 fährt. Im Zuge dieser Bewegung wird die Rückhalteeinrichtung 20 aktiviert Der Sperrschlitz 10 ist dabei vorzugsweise parallel zur Verbindungslinie der beiden Durchzugsöffnungen 42, 44 der Durchzugslasche 40 orientiert. Am Ende dieser Bewegung erreicht das Kettenglied die Spannposition 18 (vgl. Fig. 1) im Sperrschlitz 10 erreicht. Die Sperrposition 18 fluchtet mit der Durchzugsöffnung 42 und die Durchzugsposition 16 und/oder Durchzugsöffnung 8 fluchtet mit der Durchzugsöffnung 44. Damit ist die Betriebsposition 47 erreicht. Nachdem die Zugkraft Z weggefallen ist, wird die Spannkette 46 durch die gegen die Durchzugslasche 40 gedrückte Sperrplatte 1 in Position gehalten, herrscht in der Spannkette die Spannkraft S (Fig. 6).

Aus der Sperrposition 18 kann sich die Spannkette 46 in der Betriebsposition 47 gegen die Spannkraft S nur schwer lösen. Nach Wegfall der Zugkraft Z zieht nämlich die Spannkraft S die Sperrplatte 1 über den Sperrschlitz 10 gegen die an der übrigen Reifenkette befestigte Durchzugslasche 40. Dabei wird das Kettenglied 50, das auf das im Sperrschlitz befindliche Kettenglied folgt, an der von der Durchzugslasche 40 abgewandten Flachseite 2 der Sperrplatte 1 gegen die Sperrplatte 1 gedrückt. Die erschwert die Bewegung des Kettengliedes 50 zurück von der Sperrposition 18 in die Durchzugsposition 16 gegen den Widerstand der Rückhalteeinrichtung 20.

Wie Fig. 5 zeigt, kann die Sperrplatte 1 Positionierelemente 52 aufweisen, die mit durchzugslaschenseitigen Positionierelementen 52 zusammenwirken und die Sperrplatte 1 in einer vorbestimmten Betriebsposition in Richtung quer zur Längsrichtung 6 und relativ zur Durchzugslasche 40 positionieren, wenn die Spannkraft S die Sperrplatte 1 gegen die Durchzugslasche 40 drückt. Die Positionierelemente 52 können insbesondere durch den wenigstens einen Rastvorsprung 26 gebildet werden, wenn dieser in Richtung senkrecht zu den Flachseiten 2 vorspringt. Alternativ oder kumulativ kann auch ein separater Vorsprung (oder eine Vertiefung) als Positionierhilfe, insbesondere dessen Flachseite oder dessen Rand, am Sperrelement 1 vorgesehen sein. Letzteres ist insbesondere bei den Ausführungsformen der Fig. 3 und 4 sinnvoll, bei denen die Flachseiten 2 ansonsten keine Vorsprünge oder Vertiefungen aufweisen. Alternativ oder kumulativ kann die Durchzugslasche 40 mit einem Positionierelement 52, beispielsweise in Form eines Vorsprungs, versehen sein, der mit der Öffnung 4 zusammenwirkt, beispielsweise in einem Bereich zwischen der Sperrposition 18 und der Durchzugsposition 16.

Nach Erreichen der Betriebsposition wird das freie Ende 54 der Spannkette unter Bildung einer Schlaufe um 180° umgelegt und durch die Durchzugsöffnung 8 der Sperrplatte 1 und die Durchzugsöffnung 44 der Durchzugslasche 40 gesteckt. Daraus ergibt sich die in Fig. 6 dargestellte Position. Wie zu erkennen ist, befindet sich der mit der Spannkraft S beaufschlagte Abschnitt der Spannkette 46 in der Sperrposition 18, während das kraftfreie und lose Ende 54 der Spannkette 46 sich in der Durchzugsposition 16 der Sperrplatte 1 befindet.

Die Sperrposition 18 und die Durchzugsposition 16 sind so voneinander beabstandet, dass die Schlaufe 56 vorzugsweise aus genau einem Kettenglied besteht, das parallel zu den Flachseiten 2 der Sperrplatte 1 zu liegen kommt. Um diese Position einnehmen zu können, beträgt der Abstand der Mitte 58 (vgl. Fig. 1) der Sperrposition 18 von der Mitte 60 (vgl. Fig. 1) der Durchzugsposition 16 zwischen der Summe l + b der inneren lichten Länge l und der inneren lichten Breite b als dem ungefähren unteren Grenzwert und der Summe L + B der äußeren Länge L und der äußeren Breite B der Kettenglieder der Spannkette.

Figur 7 zeigt beispielhaft die entsprechenden Maße an einem Kettenglied 39 einer Rundstahl-oder Profilkette. Die innere Breite b ist die lichte Weite der zentralen Öffnung 62 eines Kettengliedes in Längsrichtung 6 der Kette. Die äußere Breite B ist die Gesamtbreite des Kettengliedes B in der von der zentralen Öffnung aufgespannten Ebene.

Die äußere Länge L entspricht der Länge des Kettengliedes in Längsrichtung 6. Die innere Länge l der Länge der zentralen Öffnung des Kettengliedes in Längsrichtung 6.

Das Kettenglied ist aus einem Material der Dicke d gefertigt, beispielsweise aus Rundstahl oder einem Vierkantstahl.

### Bezugszeichenliste

- 1: Sperrplatte
- 2: Flachseiten der Sperrplatte
- 4: Öffnung der Sperrplatte
- 6: Längsrichtung einer Spannkette
- 8: Durchzugsöffnung der Sperrplatte
- 10: Sperrschlitz der Sperrplatte
- 12: Innenkontur der Durchzugsöffnung
- 14: lichte Breite des Sperrschlitzes
- 16: Durchzugsposition
- 18: Sperrposition
- 20: Rückhalteeinrichtung
- 22: Schwerkraftrichtung
- 24: von der Spannkette überstrichener Bereich
- 26: Rastvorsprung
- 28: Rastnoppen
- 30: Dicke der Sperrplatte an der Stelle der Rückhalteeinrichtung
- 32: größter Abstand zwischen zwei Kettenglieder gleicher Ausrichtung
- 34: Kettenglied
- 38: Anordnung
- 40: Durchzugslasche
- 42: Durchzugsöffnung der Durchzugslasche
- 44: Durchzugsöffnung der Durchzugslasche
- 46: Spannkette
- 47: Betriebsposition
- 50: Kettenglied
- 52: Positionierelemente
- 54: freies Ende der Spannkette
- 56: Schlaufe
- 58: Mitte der Sperrposition
- 60: Mitte der Durchzugsposition
- 62: Öffnung eines Kettengliedes
- b: innere Breite eines Kettengliedes
- B: äußere Breite eines Kettengliedes
- l: innere Länge eines Kettengliedes
- L: äußere Länge eines Kettengliedes
- d: Dicke eines Kettengliedes
- S: Spannkraft
- Z: Zugkraft

## Patentansprüche

1. Sperrplatte (1) zum Spannen von Reifenketten mit Hilfe einer Spannkette (46), mit einem Sperrschlitz (10), dessen lichte Breite (14) größer als eine Dicke (d) und kleiner als eine äußere Breite (B) der Kettenglieder (50) der Spannkette ist, und mit einer Durchzugsöffnung (8), die eine Innenkontur (12) aufweist, in die eine Außenkontur der Spannkette einschreibbar ist, und die Spannkette quer zu ihrer Längserstreckung (6) unverlierbar zwischen einer im Bereich des Sperrschlitzes angeordneten Sperrposition (18) und einer im Bereich der Durchzugsöffnung angeordneten Durchzugsposition (16) beweglich aufnehmbar ist, und wobei zwischen der Sperrposition (18) und der Durchzugsposition (16) wenigstens eine mit der Spannkette (46) zusammenwirkende Rückhalteeinrichtung (20) vorgesehen ist, welche wenigstens einen Rastvorsprung (26) aufweist, **dadurch gekennzeichnet, dass** sich der Rastvorsprung in Längsrichtung (L) der Spannkette von der Sperrplatte weg erstreckt.

2. Sperrplatte nach Anspruch 1, **dadurch gekennzeichnet, dass** der wenigstens eine Rastvorsprung (26) in einem Bereich (24) angeordnet ist, der von der Spannkette (46) bei der Bewegung von der Durchzugs- (16) in die Sperrposition (18) überstrichen ist.

3. Sperrplatte (1) nach einem der Ansprüche 1 oder 2, **dadurch gekennzeichnet, dass** der wenigstens eine Rastvorsprung (26) zumindest abschnittsweise elastisch auslenkbar ausgestaltet ist.

4. Sperrplatte (1) nach einem der Ansprüche 1 bis 3, **dadurch gekennzeichnet, dass** der wenigstens eine Rastvorsprung (26) einen elastisch verformbaren Rastnoppen (28) umfasst.

5. Sperrplatte (1) nach einem der Ansprüche 1 bis 4, **dadurch gekennzeichnet, dass** die Rückhalteeinrichtung (20) in Richtung der Breite (14) seitlich neben dem oder am Sperrschlitz (10) angeordnet ist.

6. Sperrplatte (1) nach einem der Ansprüche 1 bis 5, **dadurch gekennzeichnet, dass** zu beiden Seiten des Sperrschlitzes (10) jeweils wenigstens ein Rastvorsprung (26) vorgesehen ist.

7. Sperrplatte (1) nach einem der Ansprüche 1 bis 6, **dadurch gekennzeichnet, dass** die Sperrplatte wenigstens zwei Flachseiten (2) aufweist, die von wenigstens einem Rastvorsprung (26) überragt sind.

8. Sperrplatte (1) nach einem der Ansprüche 1 bis 7, **dadurch gekennzeichnet, dass**, gemessen an der Stelle der Rückhalteeinrichtung (20) die Dicke (30) der Sperrplatte einschließlich der Rückhalteeinrichtung größer ist als der größte Abstand (32) zweier durch ein Kettenglied (34) voneinander getrennter Kettenglieder der Spannkette (46).

9. Sperrplatte (1) nach einem der Ansprüche 1 bis 8, **dadurch gekennzeichnet, dass** der Abstand der Mitte der Sperrposition (18) von der Mitte der Durchzugsposition (16) betragsmäßig zwischen der Summe (l+b) der inneren lichten Länge (l) und der inneren lichten Breite (b) und der Summe (L+B) der äußeren Länge (L) und der äußeren Breite (B) der Kettenglieder (34) der Spannkette (46) liegt.

10. Anordnung (38) zum Spannen einer Reifenkette mit Hilfe einer Spannkette (46), umfassend eine Sperrplatte (1) mit einer Durchzugsöffnung (8) und einem mit der Durchzugsöffnung verbundenen Sperrschlitz (10) und eine Durchzugslasche (40) mit wenigstens zwei Durchzugsöffnungen (42, 44), **dadurch gekennzeichnet, dass** die Sperrplatte (1) nach einem der Ansprüche 1 bis 9 ausgestaltet ist.

11. Anordnung (38) nach Anspruch 10, **dadurch gekennzeichnet, dass** die Sperrplatte und die Durchzugslasche in einer Betriebsposition, in der die Sperrposition mit der einen und die Durchzugsposition mit der anderen Durchzugsöffnung der Durchzugslasche fluchten, anordenbar ausgestaltet wird.

12. Anordnung (38) nach Anspruch 10 oder 11, **dadurch gekennzeichnet, dass** die Betriebsposition in einer Ebene quer zur Längsrichtung (L) der Spannkette (46) durch Zusammenwirken der Positionierelemente (52) von Durchzugslasche (40) und Sperrplatte (1) festgelegt ist.

13. Anordnung (38) nach einem der Ansprüche 10 bis 12, **dadurch gekennzeichnet, dass** die Sperrplatte (1) wenigstens einen mit der Spannkette (46) zusammenwirkenden Rastvorsprung (26) aufweist, der als Positionierelement dient.

14. Anordnung (38) nach einem der Ansprüche 10 bis 13, **dadurch gekennzeichnet, dass** in der Betriebsposition die Sperrplatte (1) und die Durchzugslasche (38) im Wesentlichen ausschließlich durch eine in der Spannkette (46) herrschende Spannkraft (S) gegeneinander gedrückt sind.

## Claims

1. Locking plate (1) for tensioning tire chains by means of a tensioning chain (46), with a locking slot (10) whose clear width (14) is greater than a thickness (d) and smaller than an external width (B) of the chain links (50) of the tensioning chain, and with a pull-through opening (8) having an inner contour (12) into which an outer contour of the tensioning chain can be entered, and wherein the tensioning chain can be received transverse to its longitudinal extension (6) to be captively movable between a locking position (18) arranged in the region of the locking slot and a pull-through position (16) arranged in the region of the pull-through opening, and wherein between the locking position (18) and the pull-through position (16), at least one retaining means (20) cooperating with the tensioning chain (46) is provided, wherein the retaining means (20) comprises at least one catch projection (26), **characterized in that** the at least one catch projection (26) extends away from the locking plate in the longitudinal direction (L) of the tensioning chain.

2. Locking plate according to claim 1, **characterized in that** the at least one catch projection (26) is arranged in a region (24) over which the tensioning chain (46) passes during the movement from the pull-through (16) to the locking position (18).

3. Locking plate (1) according to one of claims 1 or 2, **characterized in that** the at least one catch projection (26) is embodied to be elastically deflectable at least in sections.

4. Locking plate (1) according to one of claims 1 to 3, **characterized in that** the at least one catch projection (26) comprises an elastically deformable catch knob (28).

5. Locking plate (1) according to one of claims 1 to 4, **characterized in that** the retaining means (20) is arranged in the direction of the width (14) laterally next to or at the locking slot (10).

6. Locking plate (1) according to one of claims 1 to 5, **characterized in that** at least one catch projection (26) each is provided at either side of the locking slot (10).

7. Locking plate (1) according to one of claims 1 to 6, **characterized in that** the locking plate comprises at least two flat sides (2) over which at least one catch projection (26) projects.

8. Locking plate (1) according to one of claims 1 to 7, **characterized in that**, measured at the point of the retaining means (20), the thickness (30) of the locking plate including the retaining means is greater than the greatest distance (32) of two chain links of the tensioning chain (46) separated by one chain link (34).

9. Locking plate (1) according to one of claims 1 to 8, **characterized in that** the amount of the distance of the center of the locking position (18) from the center of the pull-through position (16) is between the sum (I + b) of the inner clear length (I) and the inner clear width (b) and the sum (L+B) of the outer length (L) and the outer width (B) of the chain links (34) of the tensioning chain (46).

10. Arrangement (38) for tensioning a tire chain by means of a tensioning chain (46), comprising a locking plate (1) with a pull-through opening (8) and a locking slot (10) connected to the pull-through opening, and a pull-through bracket (40) with at least two pull-through openings (42, 44), **characterized in that** the locking plate (1) is embodied according to one of claims 1 to 9.

11. Arrangement (38) according to claim 10, **characterized in that** the locking plate and the pull-through bracket are embodied so that they can be arranged in an operating position in which the locking position is aligned with the one, and the pull-through position with the other pull-through opening of the pull-through bracket.

12. Arrangement (38) according to claim 10 or 11, **characterized in that** the operating position is fixed in a plane transverse to the longitudinal direction (L) of the tensioning chain (46) by cooperation of the positioning elements (52) of the pull-through bracket (40) and the locking plate (1).

13. Arrangement (38) according to one of claims 10 to 12, **characterized in that** the locking plate (1) comprises at least one catch projection (26) cooperating with the tensioning chain (46), the projection serving as positioning element.

14. Arrangement (38) according to one of claims 10 to 13, **characterized in that** in the operating position, the locking plate (1) and the pull-through bracket (38) are pressed against each other essentially exclusively by a tension force (S) prevailing in the tensioning chain (46).

## Revendications

1. Plaque de verrouillage (1) pour le serrage de chaînes à pneumatique à l'aide d'une chaine de serrage (46), comprenant une fente de verrouillage (10) dont la largeur d'ouverture (14) est supérieure à une épaisseur (d) et inférieure à une largeur extérieure (B) des maillons de chaine (50) de la chaine de serrage, et comprenant une ouverture de passage coulissant (8), qui présente un contour intérieur (12) dans lequel peut s'inscrire un contour extérieur de la chaine de serrage, et dans lequel la chaine de serrage peut être reçue de façon imperdable, transversalement à son étendue longitudinale (6), de manière mobile entre une position de verrouillage (18) agencée dans la zone de la fente de verrouillage, et une position de passage coulissant (16), et au moins un dispositif de retenue (20), qui coopère avec la chaine de serrage (46), étant prévu entre la position de verrouillage (18) et la position de passage coulissant (16), ce dispositif de retenue présentant au moins une protubérance d'encliquetage (26),
**caractérisée en ce que** la protubérance d'encliquetage s'étend de manière à s'écarter de la plaque de serrage dans la direction longitudinale (L) de la chaine de serrage.

2. Plaque de verrouillage selon la revendication 1,
**caractérisée en ce que** ladite au moins une protubérance d'encliquetage (26) est agencée dans une zone (24), que balaie la chaine de serrage (46) lors du mouvement de la position de passage coulissant (16) à la position de verrouillage (18).

3. Plaque de verrouillage (1) selon l'une des revendications 1 ou 2, **caractérisée en ce que** ladite au moins une protubérance d'encliquetage (26) est au moins en partie d'une configuration permettant une déviation élastique.

4. Plaque de verrouillage (1) selon l'une des revendications 1 à 3, **caractérisée en ce que** ladite au moins une protubérance d'encliquetage (26) comprend un plot d'encliquetage (28) élastiquement déformable.

5. Plaque de verrouillage (1) selon l'une des revendications 1 à 4, **caractérisée en ce que** le dispositif de retenue (20) est, dans la direction de la largeur (14), agencé latéralement à côté ou au niveau de la fente de verrouillage (10).

6. Plaque de verrouillage (1) selon l'une des revendications 1 à 5, **caractérisée en ce qu'**il est prévu au moins une protubérance d'encliquetage (26) respectivement des deux côtés de la fente de verrouillage (10).

7. Plaque de verrouillage (1) selon l'une des revendications 1 à 6, **caractérisée en ce que** la plaque de verrouillage présente au moins deux faces plates (2) dont dépassent au moins une protubérance d'encliquetage (26).

8. Plaque de verrouillage (1) selon l'une des revendications 1 à 7, **caractérisée en ce que**, mesurée au niveau du dispositif de retenue (20), l'épaisseur (30) de la plaque de verrouillage y compris le dispositif de retenue, est supérieure à la distance (32) la plus grande entre deux maillons de chaine de la chaine de serrage (46) séparés mutuellement par un autre maillon de chaine (34).

9. Plaque de verrouillage (1) selon l'une des revendications 1 à 8, **caractérisée en ce que** la distance du centre de la position de verrouillage (18) au centre de la position de passage coulissant (16) se situe, quant à sa valeur, entre la somme (l+b) de la longueur de passage intérieure (l) et de la largeur de passage intérieure (b), et la somme (L+B) de la longueur extérieure (L) et de la largeur extérieure (B) des maillons de chaine (34) de la chaine de serrage (46).

10. Agencement (38) pour assurer le serrage d'une chaine à pneumatique à l'aide d'une chaine de serrage (46), comprenant une plaque de verrouillage (1) avec une ouverture de passage coulissant (8) et avec une fente de verrouillage (10) reliée à l'ouverture de passage coulissant, et une languette de passage coulissant (40) avec au moins deux ouvertures de passage coulissant (42, 44), **caractérisé en ce que** la plaque de verrouillage (1) est d'une configuration selon l'une des revendications 1 à 9.

11. Agencement (38) selon la revendication 10, **caractérisé en ce que** la plaque de verrouillage et la languette de passage coulissant sont réalisées de manière à pouvoir être agencées dans une position de service dans laquelle la position de verrouillage est alignée avec l'une, et la position de passage coulissant est alignée avec l'autre des ouvertures de passage coulissant de la languette de passage coulissant.

12. Agencement (38) selon la revendication 10 ou la revendication 11, **caractérisé en ce que** la position de service est déterminée dans un plan transversalement à la direction longitudinale (L) de la chaine de serrage (46), par interaction des éléments de positionnement (52) de la languette de passage coulissant (40) et de la plaque de verrouillage (1).

13. Agencement (38) selon l'une des revendications 10 à 12, **caractérisé en ce que** la plaque de verrouillage (1) présente au moins une protubérance d'encliquetage (26) interagissant avec la chaine de serrage (46) et faisant office d'élément de positionnement.

14. Agencement (38) selon l'une des revendications 10 à 13, **caractérisé en ce que** dans la position de service, la plaque de serrage (1) et la languette de passage coulissant (38) sont pressées l'une contre l'autre pratiquement exclusivement par une force de serrage (S) régnant dans la chaine de serrage (46).
